# EUROPEAN PATENT SPECIFICATION

(11) **EP 3 376 185 B1**
(45) Date of publication and mention of the grant of the patent: **18.11.2020**
(21) Application number: 18161405.8
(22) Date of filing: 13.03.2018
(51) Int. Cl.: G01G 19/393

(54) **COMBINATION WEIGHING DEVICE**
KOMBINATIONSWIEGEVORRICHTUNG
DISPOSITIF DE PESAGE PAR COMBINAISON

(30) Priority: 17.03.2017 JP 2017053423
(43) Date of publication of application: 19.09.2018
(73) Proprietor: Ishida Co., Ltd., Kyoto 606-8392 (JP)
(72) Inventor: Eto, Takao, Shiga, 520-3026 (JP)
(74) Representative: Gill Jennings & Every LLP

(56) References cited:
- EP-A1- 1 164 365
- EP-A2- 2 116 823
- DE-U1-202015 101 279

## Description

### TECHNICAL FIELD

The present disclosure relates to a combination weighing device.

### BACKGROUND

There is known a combination weighing device which conveys a weighing target fed into a trough to a weighing unit by rotating a screw disposed inside the trough. Such a combination weighing device is described in, for example, Patent Literature 1 (Japanese Unexamined Patent Publication No. 2008-537099).

The screw described in Patent Literature 1 includes a rod which is formed in a spiral shape and a pillar core which is disposed inside the rod. The core suppresses staying of a weighing target inside the spiral rod. Accordingly, the screw can highly accurately convey a predetermined amount of the weighing target.

Another example of a combination weighing device may be found in EP 2116823 A2.

### SUMMARY

However, when the screw described in Patent Literature 1 is cleaned, it is necessary to separate the core and the rod in order to clean a gap between the outer peripheral surface of the core and the rod. As a result, a cleaning performance is poor.

Here, the present disclosure describes a combination weighing device capable of highly accurately conveying a predetermined amount of a weighing target by a screw and improving a screw cleaning performance.

A combination weighing device according to the present invention and independent claim 1 includes: a weighing unit which weighs a weighing target; a trough which extends toward the weighing unit; a screw which is rotated inside the trough so that the weighing target fed into the trough is conveyed toward the weighing unit; and a rotational driving unit which rotates the screw, wherein the screw is a non-axial member that is formed as a spiral plate-shaped member extending in a weighing target conveying direction.

The screw of the combination weighing device is the non-axial member formed as the spiral plate-shaped member. Accordingly, the screw can decrease a space formed around the spiral axis or eliminate the space when viewed in the spiral axis direction. For this reason, the screw can suppress staying of the weighing target around the spiral axis and highly accurately convey a predetermined amount of the weighing target. Further, the screw does not include a core or the like for suppressing the staying of the weighing target. For this reason, the screw can be easily cleaned. As described above, the combination weighing device can highly accurately convey a predetermined amount of the weighing target by the screw and improve a screw cleaning performance. Further, the screw is non-axial, that is, does not include a shaft member other than the plate-shaped member. For this reason, a decrease in weight of the screw can be realized.

The screw may be formed as a cantilever structure in which an upstream end portion in the weighing target conveying direction is connected to the rotational driving unit and is supported by the upstream end portion connected to the rotational driving unit. In this case, the screw can deliver the weighing target toward the weighing unit from the downstream end portion in the conveying direction without causing the weighing target to stay at the downstream end portion in the conveying direction.

A gap between a bottom surface of the trough and the screw may be widened toward a downstream side in the weighing target conveying direction. For example, since the screw has a cantilever structure, it is considered that the screw is bent so that the downstream end portion of the screw in the weighing target conveying direction approaches the bottom surface of the trough. Since a gap between the bottom surface of the trough and the screw is widened toward the downstream side in the weighing target conveying direction, it is possible to suppress contacting of the screw with the bottom surface of the trough even when the screw is bent.

An upper portion of the trough may be opened in an entire area of a portion provided with the screw in the weighing target conveying direction. For example, the screw conveys a solid material (a semisolid material) such as meat as the weighing target. Also in this case, since the upper portion of the trough is opened, the weighing target can escape to the upper portion of the trough even when the weighing target stays in the trough and thus the clogging of the weighing target inside the trough is suppressed.

According to the present disclosure, it is possible to obtain a combination weighing device capable of highly accurately conveying a predetermined amount of a weighing target by a screw and improving a screw cleaning performance.

### BRIEF DESCRIPTION OF THE DRAWINGS

FIG. 1 is a configuration diagram of a combination weighing device according to an embodiment of the present disclosure.
FIG. 2 is a perspective view showing a schematic configuration of the combination weighing device of FIG. 1.
FIG. 3 is a front view showing a schematic configuration of a dispersion feeder and a radiation feeder of FIG. 1.
FIG. 4 is a partially cross-sectional view of a casing, a dispersion feeder, and a radiation feeder of the combination weighing device of FIG. 1.
FIG. 5A is a cross-sectional view taken along a line Va-Va of FIG. 4.
FIG. 5B is a cross-sectional view taken along a line Vb-Vb of FIG. 4.
FIG. 6 is a plan view showing the radiation feeder of FIG. 1.
FIG. 7A is a side view of a screw of a modified example.
FIG. 7B is a diagram showing the screw of the modified example when viewed from a front end side.

### DETAILED DESCRIPTION

Hereinafter, an embodiment of the present disclosure will be described with reference to the drawings. In addition, the same reference numerals will be given to the same components in the description of the drawings and a repetitive description will be omitted.

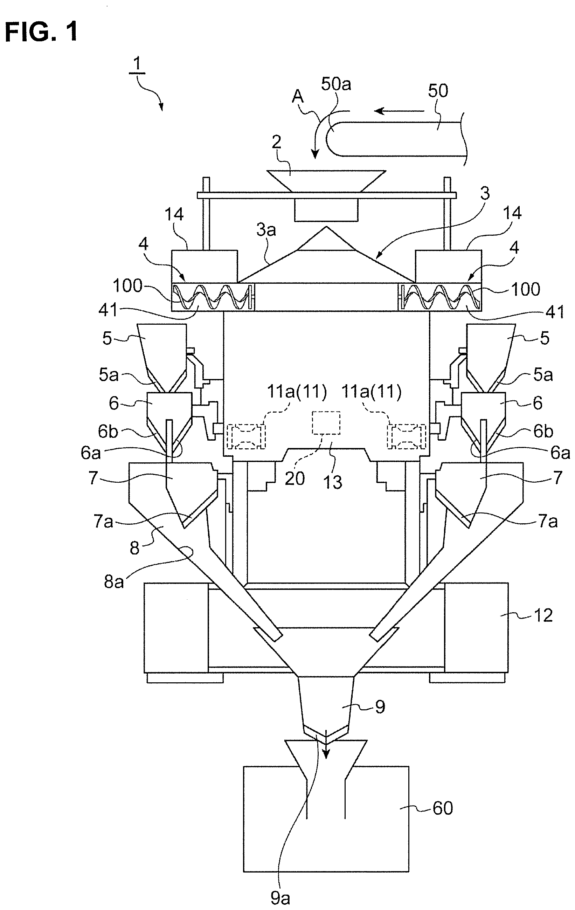

As shown in FIG. 1, a combination weighing device 1 includes a feeding chute 2, a dispersion feeder 3, a plurality of radiation feeders 4, a plurality of pool hoppers 5, a plurality of weighing hoppers 6, a plurality of booster hoppers 7, a collecting chute 8, a timing hopper 9, a weighing unit 11, and a control unit 20.

The combination weighing device 1 weighs an article A (an article (a weighing target) which is different in unit mass such as agricultural products, fishery products, meats, and processed foods) supplied by a conveyor 50 to be a target weighed value and supplies the article A to a bag manufacturing and packaging machine 60. In addition, the bag manufacturing and packaging machine 60 packs the article A weighed and supplied by the combination weighing device 1 while forming a film into a bag of a predetermined capacity.

The feeding chute 2 is disposed below a conveying end 50a of the conveyor 50. The feeding chute 2 receives the article A dropped from the conveying end 50a of the conveyor 50 and discharges the article A downward. The dispersion feeder 3 is disposed below the feeding chute 2. The dispersion feeder 3 includes a conical conveying surface 3a which spreads downward. The dispersion feeder 3 is rotated around the rotation axis extending in the vertical direction so that the article A discharged from the feeding chute 2 onto the top portion of the conveying surface 3a is uniformly conveyed toward the outer edge of the conveying surface 3a.

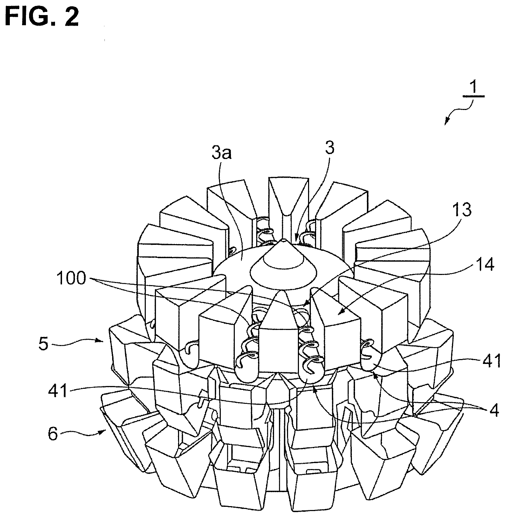

The plurality of radiation feeders 4 are disposed radially along the outer edge of the conveying surface 3a of the dispersion feeder 3. Each radiation feeder 4 includes a trough 41 which extends outward toward the pool hopper 5 from the lower side of the outer edge of the conveying surface 3a and a screw 100 which is disposed in the trough 41. The screw 100 is rotated inside the trough 41 so that the article A fed into the trough 41 is conveyed toward the pool hopper 5. A guide block 14 is disposed between the adjacent radiation feeders 4 (see FIG. 2). The guide block 14 suppresses falling of the article A between the adjacent radiation feeders 4.

Each pool hopper 5 is disposed below the front end portion of the trough 41 of each radiation feeder 4. Each pool hopper 5 includes a gate 5a which is able to be opened and closed with respect to the bottom portion thereof. Each pool hopper 5 temporarily stores the article A discharged from the front end portion of the corresponding trough 41 by closing the gate 5a. Further, each pool hopper 5 discharges the temporarily stored article A downward by opening the gate 5a.

Each weighing hopper 6 is disposed below the gate 5a of each pool hopper 5. Each weighing hopper 6 includes a gate 6a and a gate 6b which are able to be opened and closed with respect to the bottom portion thereof. Each weighing hopper 6 temporarily stores the article A discharged from the corresponding pool hopper 5 by closing the gate 6a and the gate 6b. Further, each weighing hopper 6 discharges the temporarily stored article A downward by opening the gate 6a or the gate 6b.

Each booster hopper 7 is disposed below the gate 6a of each weighing hopper 6. Each booster hopper 7 includes a gate 7a which is able to be opened and closed with respect to the bottom portion thereof. Each booster hopper 7 temporarily stores the article A discharged from the gate 6a of the corresponding weighing hopper 6 by closing the gate 7a. Further, each booster hopper 7 discharges the temporarily stored article A downward by opening the gate 7a.

The collecting chute 8 has a cylindrical structure with a conical inner surface 8a which is narrowed downward. The collecting chute 8 is disposed so that the inner surface 8a is located below all weighing hoppers 6 and all booster hoppers 7. The collecting chute 8 receives the article A discharged from the gate 6b of each weighing hopper 6 and the article A discharged from each booster hopper 7 by the inner surface 8a and discharges the article A downward.

The timing hopper 9 is disposed below the collecting chute 8. The timing hopper 9 includes a gate 9a which is able to be opened and closed with respect to the bottom portion thereof. The timing hopper 9 temporarily stores the article A discharged from the collecting chute 8 by closing the gate 9a. Further, the timing hopper 9 discharges the temporarily stored article A to the bag manufacturing and packaging machine 60 by opening the gate 9a.

The weighing unit 11 is disposed inside a casing 13 supported by a frame 12. The weighing unit 11 includes a plurality of load cells 11a. Each load cell 11a supports the corresponding weighing hopper 6. The weighing unit 11 weighs the weighed value in response to the mass of the article A when the article A is temporarily stored in each weighing hopper 6.

The control unit 20 is disposed inside the casing 13. The control unit 20 includes a central processing unit (CPU), a read only memory (ROM), a random access memory (RAM), and the like. The control unit 20 controls the operations of the components of the combination weighing device 1, such as the operations of the dispersion feeder 3 and the screw 100, the opening and closing operation of the gate 5a of each pool hopper 5, the opening and closing operations of the gate 6a and the gate 6b of each weighing hopper 6, the opening and closing operation of the gate 7a of each booster hopper 7, and the opening and closing operation of the gate 9a of each timing hopper 9. Additionally, the control unit 20 is connected to the bag manufacturing and packaging machine 60 to communicate with each other.

The control unit 20 stores the weighed value weighed by the weighing unit 11 to correspond to at least one of the weighing hopper 6 and the booster hopper 7 storing the article A corresponding to the weighed value. Specifically, when the article A weighed by the weighing unit 11 is stored in the weighing hopper 6, the control unit 20 stores the weighed value weighed by the weighing unit 11 to correspond to the weighing hopper 6 storing the article A corresponding to the weighed value. When the article A weighed by the weighing unit 11 is discharged to the booster hopper 7 corresponding to the weighing hopper 6, the control unit 20 stores the weighed value of the article A weighed by the weighing unit 11 to correspond to the booster hopper 7 corresponding to the weighing hopper 6.

The control unit 20 selects a combination of the weighed values from a plurality of weighed values weighed by the weighing unit 11 and corresponding to at least one of the plurality of weighing hoppers 6 and the plurality of booster hoppers 7 so that the total value becomes the target weighed value. Specifically, the control unit 20 selects a combination of the weighed values from the plurality of weighed values output from the weighing unit 11 so that the total value enters a predetermined range in which the target weighed value is a lower-limit value. Then, the control unit 20 causes at least one of the weighing hopper 6 and the booster hopper 7 corresponding to the combination to discharge the article A.

Additionally, the feeding chute 2, the dispersion feeder 3, the plurality of radiation feeders 4, the plurality of pool hoppers 5, and the plurality of weighing hoppers 6 are directly or indirectly supported by the casing 13. The plurality of booster hoppers 7, the collecting chute 8, and the timing hopper 9 are directly or indirectly supported by the frame 12.

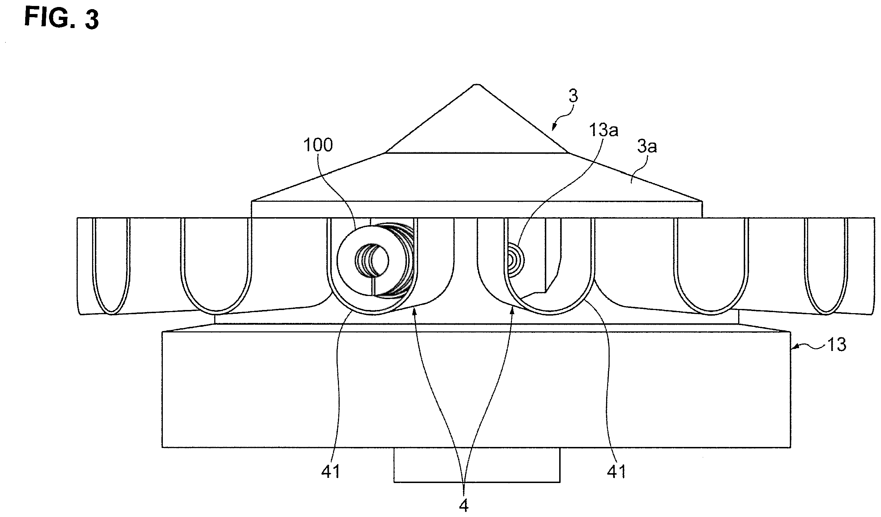

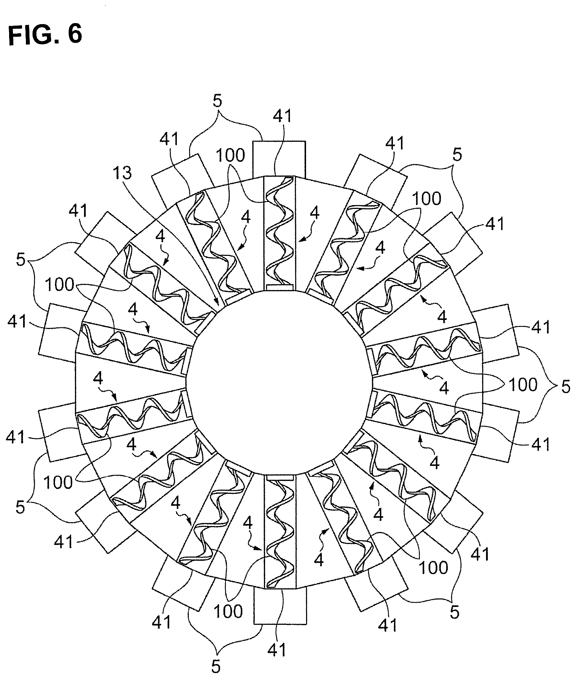

Next, the radiation feeder 4 will be described in detail with reference to FIGS. 2 to 6. Additionally, FIG. 2 shows a state where the feeding chute 2 shown in FIG. 1 is separated. Further, FIG. 2 only shows the upper portion of the weighing hopper 6. FIG. 3 shows a state where the guide block 14 shown in FIG. 2 is separated. Further, FIG. 3 shows a state where the screw 100 shown in FIG. 1 is separated except for one screw. FIG. 6 shows a state where the dispersion feeder 3 shown in FIG. 1 is separated.

As shown in FIGS. 2 to 6, the plurality of radiation feeders 4 are attached to the side surface of the casing 13 to surround the periphery of the casing 13. Each radiation feeder 4 includes the trough 41 and the screw 100. The trough 41 is attached to the casing 13 and extends toward the pool hopper 5 disposed at the outside of the casing 13 (see FIG. 6). Additionally, the article A is supplied to the weighing hopper 6 through the pool hopper 5 and is weighed by the weighing unit 11. The trough 41 constitutes a part of a conveying path for supplying the article A to the weighing unit 11. That is, the trough 41 extends toward the weighing unit 11 along the path of conveying the article A.

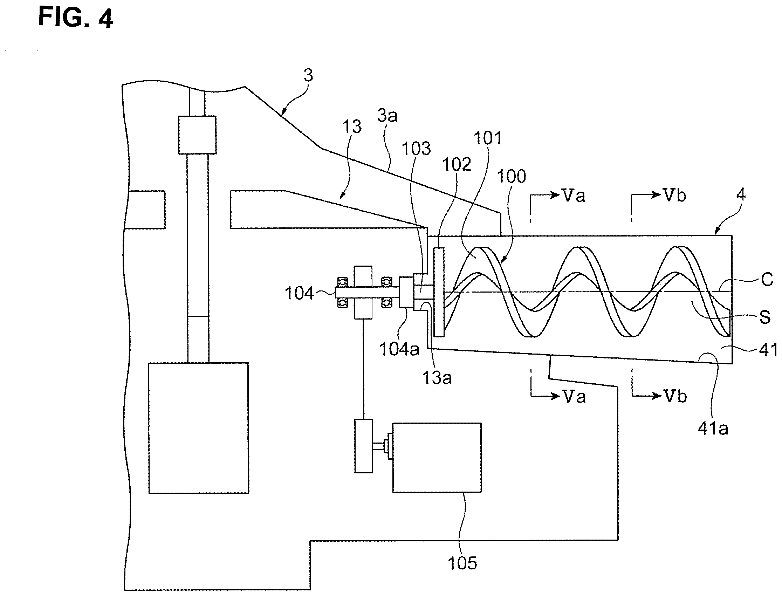

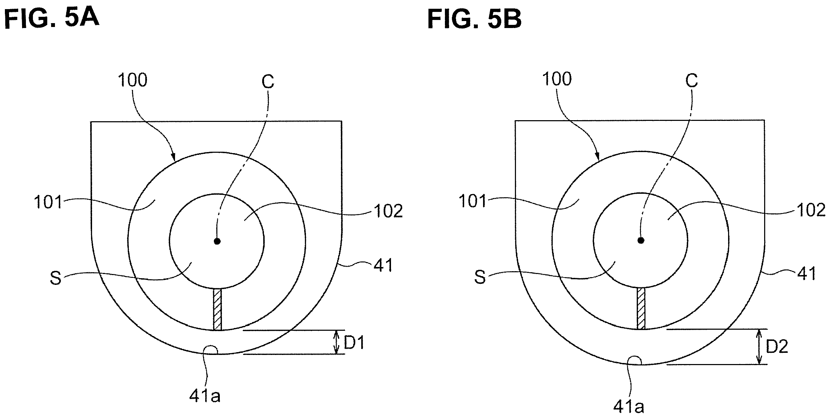

The upper portion of the trough 41 is opened in the entire area of the portion provided with the screw 100 in the direction of conveying the article A. A bottom surface 41a (see FIG. 4) of the trough 41 is inclined downward toward the pool hopper 5. That is, as in gaps D1 and D2 shown in FIGS. 5A and 5B, a gap between the bottom surface 41a of the trough 41 and the screw 100 is widened toward the downstream side in the direction of conveying the article A. Additionally, FIG. 5B is a cross-sectional view at the downstream position in the direction of conveying the article A in relation to FIG. 5A.

The screw 100 is disposed inside the trough 41. As shown in FIG. 4, the screw 100 includes a screw member 101, an end plate 102, and a screw shaft 103. The end plate 102 is a disc-shaped plate. The screw member 101 is attached to the downstream surface of the end plate 102 in the direction of conveying the article A by welding or the like. The screw shaft 103 is provided at the upstream surface of the end plate 102 in the direction of conveying the article A.

Here, as shown in FIG. 4, the casing 13 accommodates a motor (a rotational driving unit) 105 and a drive shaft 104 rotated by the motor 105 for each radiation feeder 4. The drive shaft 104 includes a connection member 104a connected to the screw shaft 103 of the screw 100.

The screw shaft 103 of the screw 100 is inserted into the casing 13 through a hole 13a provided in the casing 13 and is connected to the connection member 104a of the drive shaft 104. That is, the screw 100 is formed as a cantilever structure supported by an end portion connected to the drive shaft 104 (an upstream end portion in the direction of conveying the article A). When the motor 105 rotates, the screw 100 rotates around the rotation axis C extending in the horizontal direction. Accordingly, the screw 100 conveys the article A fed into the trough 41 toward the pool hopper 5. Additionally, the rotation of the motor 105 is controlled by the control unit 20.

Further, the screw shaft 103 of the screw 100 is connected to the connection member 104a of the drive shaft 104 to be separable. For example, the screw 100 is separated when a cleaning operation is performed.

Next, the screw 100 will be described in detail. As shown in FIG. 4, the screw member 101 is a non-axial member that is formed as a spiral plate-shaped member extending in the direction of conveying the article A. The screw member 101 is rotated by the motor 105 to convey the article A toward the pool hopper 5. The motor 105 rotates the screw 100 in a direction in which the article A is conveyed to the pool hopper 5 by the screw member 101. Additionally, the rotation axis C and the spiral axis of the screw member 101 are coaxial to each other.

As shown in FIG. 5A, the screw member 101 of the embodiment has a space S extending in the direction of conveying the article A when viewed in the direction of conveying the article A. That is, the space S is formed around the rotation axis C of the screw member 101.

As described above, in the combination weighing device 1 of the embodiment, the screw member 101 of the screw 100 is the non-axial member formed as the spiral plate-shaped member. Accordingly, the screw member 101 can decrease the space S formed around the spiral axis compared to a case where the screw member 101 is formed as a spiral rod when viewed in the spiral axis direction. For this reason, the screw 100 can suppress staying of the article A around the spiral axis of the screw member 101 and highly accurately convey a predetermined amount of the article A. Further, the screw 100 does not include a core or the like for suppressing the staying of the article A. For this reason, the screw 100 can be easily cleaned. As described above, the combination weighing device 1 can highly accurately convey a predetermined amount of the article A by the screw 100 and improve the cleaning performance of the screw 100. Further, the screw member 101 of the screw 100 is non-axial, that is, does not have a shaft member other than the plate-shaped member. For this reason, a decrease in weight of the screw 100 can be realized.

The screw 100 is formed as a cantilever structure supported by the upstream end portion (the screw shaft 103) in the direction of conveying the article A. In this case, the screw 100 can deliver the article A toward the pool hopper 5 from the downstream end portion in the conveying direction without causing the article A to stay at the downstream end portion in the conveying direction.

A gap between the bottom surface 41a of the trough 41 and the screw 100 is widened toward the downstream side in the direction of conveying the article A. For example, since the screw 100 has a cantilever structure, a case is considered in which the screw 100 is bent so that the downstream end portion of the screw 100 in the direction of conveying the article A approaches the bottom surface 41a of the trough 41. Since a gap between the bottom surface 41a of the trough 41 and the screw 100 is widened toward the downstream side in the direction of conveying the article A, it is possible to suppress contacting of the screw 100 with the bottom surface 41a of the trough 41 even when the screw 100 is bent.

The upper portion of the trough 41 is opened in the entire area of the portion provided with the screw 100 in the direction of conveying the article A. For example, the screw 100 conveys a solid material (a semisolid material) such as meat as the article A. Even in this case, since the upper portion of the trough 41 is opened, the article A can escape to the upper portion of the trough 41 even when the article A stays in the trough 41 and thus the clogging of the article A in the trough 41 can be suppressed.

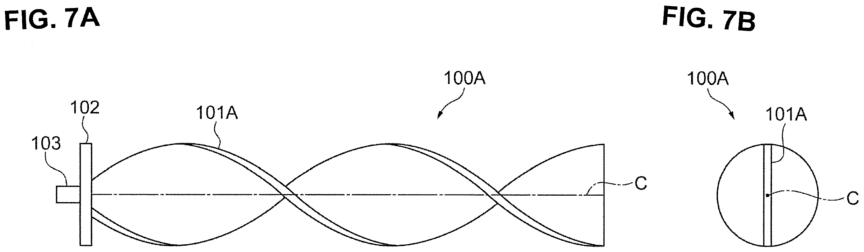

Next, a modified example of the screw 100 will be described. As shown in FIGS. 7A and 7B, a screw 100A of the modified example includes a screw member 101A, an end plate 102, and a screw shaft 103. The screw member 101A is a non-axial member that is formed as a spiral plate-shaped member extending in the direction of conveying the article A. In the screw member 101A, as shown in FIG. 7B, a space is not formed around the rotation axis C when viewed in the direction of conveying the article A (the rotation axis C of the screw 100A). That is, the screw member 101A has a shape in which the plate-shaped member is twisted around the rotation axis C. In the screw member 101A, a space is not formed around the spiral axis (the rotation axis C) when viewed in the spiral axis direction. For this reason, the screw 100A can suppress staying of the article A around the spiral axis of the screw member 101A and can highly accurately convey a predetermined amount of the article A.

The plurality of hoppers may not be disposed in an annular shape as in the plurality of weighing hoppers 6 and the plurality of booster hoppers 7, but may be disposed in a matrix shape. Further, the combination weighing device of the present disclosure may not include the plurality of booster hoppers 7.

## Claims

1. A combination weighing device (1) comprising:
a weighing unit (6) which weighs a weighing target;
a trough (41) which extends toward the weighing unit (6);
a screw (100, 100A) which is rotated inside the trough (41) so that the weighing target fed into the trough (41) is conveyed toward the weighing unit (6); and
a rotational driving unit (105) which rotates the screw,
**characterized in that** the screw (100, 100A) is a non-axial member that is formed as a spiral plate-shaped member (101, 101A) extending in a weighing target conveying direction.

2. The combination weighing device according to claim 1,
wherein the screw (100, 100A) is formed as a cantilever structure in which an upstream end portion in the weighing target conveying direction is connected to the rotational driving unit (105) and is supported by the upstream end portion connected to the rotational driving unit.

3. The combination weighing device according to claim 2,
comprising a gap between a bottom surface of the trough (41) and the screw (100, 100A).

4. The combination weighing device according to claim 3, wherein the gap is widened toward a downstream side in the weighing target conveying direction.

5. The combination weighing device according to any one of claims 1 to 4,
wherein an upper portion of the trough (41) is opened in an entire area of a portion provided with the screw in the weighing target conveying direction.

6. The combination weighing device according to any one of claims 1 to 5,
wherein the screw (100) defines a space (S) around a rotation axis of the screw, the space extending in the weighing target conveying direction.

7. The combination weighing device according to any one of claims 1 to 5,
wherein the screw (100A) has a shape in which the plate-shaped member (101A) is twisted around a rotation axis of the screw such that a space extending in the weighing target conveying direction is not formed around the axis of the screw.

8. The combination weighing device according to any one of claims 1 to 7, wherein the screw (100, 100A) does not include a core for suppressing the staying of the weighing target.

9. The combination weighing device according to any one of claims 1 to 8, wherein the screw (100, 100A) does not have a shaft member other than the plate-shaped member (101, 101A).

10. The combination weighing device according to any one of claims 1 to 9, comprising a respective plurality of each of the weighing unit (6), the trough (41), the screw (100, 100A) and the rotational driving unit (105).

11. The combination weighing device according to claim 10, wherein each rotational driving unit (105) is a respective motor.

12. The combination weighing device according to claim 10 or claim 11, further comprising a control unit (20) for controlling the operations of the combination weighing device, the control unit comprising a central processing unit (CPU), a read only memory (ROM), and a random access memory (RAM).

## Patentansprüche

1. Kombinations-Wiegevorrichtung (1), umfassend:
eine Wiegeeinheit (6), die ein Wiegeziel wiegt;
einen Trog (41), der sich zur Wiegeeinheit (6) hin erstreckt;
eine Schraube (100, 100A), die im Inneren des Trogs (41) gedreht wird, so dass das in den Trog (41) eingespeiste Wiegeziel zur Wiegeeinheit (6) hin gefördert wird; und
eine Drehantriebseinheit (105), die die Schraube dreht, **dadurch gekennzeichnet, dass** die Schraube (100, 100A) ein nicht-axiales Element ist, das als ein spiralförmiges, plattenförmiges Element (101, 101A) ausgebildet ist, das sich in einer Wiegeziel-Förderrichtung erstreckt.

2. Kombinations-Wiegevorrichtung nach Anspruch 1, wobei die Schraube (100, 100A) als eine Auslegerstruktur ausgebildet ist, bei der ein stromaufwärtiger Endabschnitt in der Wiegeziel-Förderrichtung mit der Drehantriebseinheit (105) verbunden ist und von dem stromaufwärtigen Endabschnitt getragen wird, der mit der Drehantriebseinheit verbunden ist.

3. Kombinations-Wiegevorrichtung nach Anspruch 2, umfassend einen Spalt zwischen einer Bodenfläche des Trogs (41) und der Schraube (100, 100A).

4. Kombinations-Wiegevorrichtung nach Anspruch 3, wobei der Spalt zu einer stromabwärtigen Seite in der Wiegeziel-Förderrichtung erweitert ist.

5. Kombinations-Wiegevorrichtung nach einem der Ansprüche 1 bis 4, wobei ein oberer Abschnitt des Trogs (41) in einem gesamten Bereich eines Abschnitts, der mit der Schraube versehen ist, in der Wiegeziel-Förderrichtung geöffnet ist.

6. Kombinations-Wiegevorrichtung nach einem der Ansprüche 1 bis 5, wobei die Schraube (100) einen Raum (S) um eine Drehachse der Schraube definiert, wobei sich der Raum in der Wiegeziel-Förderrichtung erstreckt.

7. Kombinations-Wiegevorrichtung nach einem der Ansprüche 1 bis 5, wobei die Schraube (100A) eine Form aufweist, bei der das plattenförmige Element (101A) um eine Drehachse der Schraube so verdreht ist, dass ein Raum, der sich in der Wiegeziel-Förderrichtung erstreckt, nicht um die Achse der Schraube gebildet ist.

8. Kombinations-Wiegevorrichtung nach einem der Ansprüche 1 bis 7, wobei die Schraube (100, 100A) keinen Kern zum Unterdrücken des Verbleibens des Wiegeziels beinhaltet.

9. Kombinations-Wiegevorrichtung nach einem der Ansprüche 1 bis 8, wobei die Schraube (100, 100A) kein anderes Schaftelement als das plattenförmige Element (101, 101A) aufweist.

10. Kombinations-Wiegevorrichtung nach einem der Ansprüche 1 bis 9, umfassend eine entsprechende Vielzahl von jeweils der Wiegeeinheit (6), dem Trog (41), der Schraube (100, 100A) und der Drehantriebseinheit (105).

11. Kombinations-Wiegevorrichtung nach Anspruch 10, wobei jede Drehantriebseinheit (105) ein jeweiliger Motor ist.

12. Kombinations-Wiegevorrichtung nach Anspruch 10 oder Anspruch 11, ferner umfassend eine Steuereinheit (20) zum Steuern der Vorgänge der Kombinations-Wiegevorrichtung, wobei die Steuereinheit eine zentrale Verarbeitungseinheit (CPU), einen Festwertspeicher (ROM) und einen Speicher mit wahlfreiem Zugriff (RAM) umfasst.

## Revendications

1. Un dispositif de pesage par combinaison (1) composé des éléments suivants :
un groupe de pesage (6) qui est conçu pour peser un objectif de pesage
une cuve (41) qui vient s'implanter en direction du groupe de pesage (6)
une vis (100, 100A) qui tourne à l'intérieur de la cuve (41) afin de faire avancer l'objectif de pesage dans cette cuve (41), en direction du groupe de pesage (6), et
un groupe rotatif de transmission (105) qui fait tourner la vis
et cet ensemble se **caractérise par le fait que** la vis (100, 100A) est un élément non-axial qui se présente sous la forme d'un élément en spirale à profil de plaquette (101, 101A) qui vient s'implanter dans le sens de déplacement de l'objectif de pesage.

2. Le dispositif de pesage par combinaison que décrit la revendication 1,
si ce n'est que la vis (100, 100A) se présente sous la forme d'une structure en porte-à-faux dont l'extrémité amont, dans le sens de déplacement de l'objectif de pesage, vient se raccorder au groupe rotatif de transmission (105) et est soutenue par l'extrémité amont du groupe rotatif de transmission.

3. Le dispositif de pesage par combinaison que décrit la revendication 2,
si ce n'est qu'il comporte un écart entre la surface inférieure de la cuve (41) et la vis (100, 100A).

4. Le dispositif de pesage par combinaison que décrit la revendication 3, si ce n'est que cet écart s'élargit en direction d'un côté aval, dans le sens de déplacement de l'objectif de pesage.

5. Le dispositif de pesage par combinaison que décrit l'une ou l'autre des revendications 1 à 4, si ce n'est qu'une partie supérieure de la cuve (41) s'ouvre dans une zone entière de la partie dans laquelle vient s'implanter la vis, dans le sens de déplacement de l'objectif de pesage.

6. Le dispositif de pesage par combinaison que décrit l'une ou l'autre des revendications 1 à 5, si ce n'est que la vis (100) définit un espace (S) autour d'un axe de rotation de la vis et que cet espace se situe dans le sens de déplacement de l'objectif de pesage.

7. Le dispositif de pesage par combinaison que décrit l'une ou l'autre des revendications 1 à 5, si ce n'est que la vis (100A) a une forme dont l'élément à profil de plaquette (101A) s'enroule en torsade autour de l'axe de rotation de la vis afin qu'aucun espace dans le sens de déplacement de l'objectif de pesage ne se forme autour de la vis.

8. Le dispositif de pesage par combinaison que décrit l'une ou l'autre des revendications 1 à 7, si ce n'est que la vis (100, 100A) ne comporte pas de noyau central de suppression du maintien de l'objectif de pesage.

9. Le dispositif de pesage par combinaison que décrit l'une ou l'autre des revendications 1 à 8, si ce n'est que la vis (100, 100A) n'a pas d'élément à arbre en dehors de l'élément à profil de plaquette (101, 101A).

10. Le dispositif de pesage par combinaison que décrit l'une ou l'autre des revendications 1 à 9, si ce n'est qu'il comporte, respectivement, une pluralité de chacun des éléments suivants : le groupe de pesage (6), la cuve (41), la vis (100, 100A) et le groupe rotatif de transmission (105).

11. Le dispositif de pesage par combinaison que décrit la revendication 10, si ce n'est que chaque groupe rotatif de transmission (105) est un moteur respectif.

12. Le dispositif de pesage par combinaison que décrit la revendication 10 ou 11, si ce n'est qu'il comporte, en outre, un groupe de commande (20) qui assure le contrôle des opérations du dispositif de pesage par combinaison et que ce groupe de commande se compose d'un groupe central de traitement (CPU), d'une mémoire morte (ROM) et d'une mémoire vive (RAM).
